# EUROPEAN PATENT APPLICATION

(11) **EP 4 614 704 A1**
(43) Date of publication of application: **10.09.2025**
(21) Application number: 25158848.9
(22) Date of filing: 19.02.2025
(51) Int. Cl.: H01M 50/247, H01M 50/271, H01M 50/262, E05B 65/00, H04M 1/02, H05K 5/03

(54) **PORTABLE MEDICAL DEVICE CASE**

(30) Priority: 26.02.2024 KR 20240027387
(71) Applicant: i-Sens, Inc., Seoul 06646 (KR)
(72) Inventor: LYU, Goang Yel, Goyang-si (KR); HONG, Mi In, Seoul (KR)
(74) Representative: HGF

(57) **Abstract**

The present disclosure relates to a portable medical device case including a main body provided with a battery accommodation space inside, a cover detachably coupled to the main body to open and close the battery accommodation space, and a hole penetrating at least a part of the main body, wherein in a state where the cover is coupled to the main body, a part of the cover is located inside the main body, and the hole accommodates an external tool which presses a part of the cover to separate the cover from the main body.

## Description

### BACKGROUND OF THE INVENTION

### 1. Field

The present disclosure relates to a portable medical device case.

### 2. Description of the Related Art

A portable medical device equipped with primary batteries requires battery replacement. When replacing the battery, a cover covering the battery in the case should be temporarily separated, and a conventional cover has a structure that may be easily separated with little force.

However, this conventional cover has a problem in that it may be easily separated not only by adults but also by infants and toddlers. For example, in the case of batteries with a very small size such as button cells (coin cells), there is a risk of swallowing accidents for infants and toddlers, so the ease of separation of the conventional cover is problematic in that it may cause safety accidents such as battery swallowing accidents for infants and toddlers.

### [Prior-Art Document]

### [Patent Document]

Korean Patent Application Publication No. 10-2016-0065173

### SUMMARY OF THE INVENTION

One object of embodiments of the present disclosure is to provide a portable medical device case including a cover that is difficult to separate without an external tool.

According to one aspect of the present disclosure, there is provided a portable medical device case including: a main body provided with a battery accommodation space inside; a cover detachably coupled to the main body to open and close the battery accommodation space; and a hole penetrating at least a part of the main body, wherein in a state where the cover is coupled to the main body, a part of the cover is located inside the main body, and the hole accommodates an external tool which presses a part of the cover to separate the cover from the main body.

The cover may include a plate; and a fastening part formed at one end part of the plate and pressed by the external tool inside the main body.

A concave part may be formed on an inner surface of the main body, the fastening part may be inserted into the concave part inside the main body, and the hole may be penetrated toward the concave part.

An inner surface of the concave part may include a first inclined surface, and the fastening part may include a second inclined surface facing the first inclined surface.

The fastening part may include a pressure surface which is pressed by the external tool, and the pressure surface may include an inclined surface.

A contact part capable of contacting a battery may be formed on a surface of the plate facing the battery accommodation space.

A hook may be formed at another end part of the plate, and an insertion groove into which the hook is inserted may be formed in the main body.

The cover may be separated from the main body by moving parallel to a longitudinal direction of the main body.

According to embodiments of the present disclosure, it is possible to prevent safety accidents such as battery swallowing accidents by infants and toddlers.

### BRIEF DESCRIPTION OF THE DRAWINGS

FIG. 1 is a diagram illustrating a portable medical device case disassembled according to an embodiment of the present disclosure.
FIG. 2 is a diagram illustrating a perspective view of a portable medical device case according to an embodiment of the present disclosure.
FIG. 3 is a diagram illustrating a state in which a cover is separated from a portable medical device case according to an embodiment of the present disclosure.
FIG. 4 is a diagram illustrating a state in which a battery is exposed through a portable medical device case according to an embodiment of the present disclosure.
FIG. 5 is a diagram illustrating a lower main body of a portable medical device case according to an embodiment of the present disclosure.
FIG. 6 is a diagram illustrating an upper main body of a portable medical device case according to an embodiment of the present disclosure.
FIG. 7 is a diagram illustrating a cover of a portable medical device case according to an embodiment of the present disclosure.
FIG. 8 is a diagram illustrating a method of separating a cover from a portable medical device case according to an embodiment of the present disclosure.
FIG. 9 is a diagram illustrating a step of separating a cover from a portable medical device case according to an embodiment of the present disclosure.
FIG. 10 is a diagram illustrating a step of separating a cover from a portable medical device case according to anoher embodiment of the present disclosure.

### DETAILED DESCRIPTION

The terms used in the present application are used merely to describe particular embodiments and are not intended to limit the present disclosure. Singular expressions include plural expressions unless the context clearly indicates otherwise. In the present application, it should be understood that terms such as "comprise", "include", or "have" are intended to designate the presence of features, numbers, steps, operations, components, parts, or combinations thereof described in the specification, and they do not preclude the possibility of the presence or addition of one or more other features, numbers, steps, operations, components, parts, or combinations thereof. In addition, throughout the specification, the term "on" means being located above or below a target part, and does not necessarily mean being located on an upper side based on the direction of gravity.

Terms such as first and second are merely identifiers used to distinguish identical or corresponding components, and the identical or corresponding components are not limited by terms such as first and second.

In addition, in a contact relationship between components, the term "coupling" is used as a concept that includes not only cases where the components are physically in direct contact with each other, but also encompasses cases where another component is interposed between the components, with each of the components being in contact with the other component.

The size and thickness of each component shown in the drawings are arbitrarily shown for convenience of explanation, and therefore the present disclosure is not necessarily limited to what is shown.

Hereinafter, a portable medical device case according to an embodiment of the present disclosure will be described in detail with reference to the accompanying drawings, and in describing with reference to the accompanying drawings, identical or corresponding components will be assigned the same drawing numbers and overlapping descriptions thereof will be omitted.

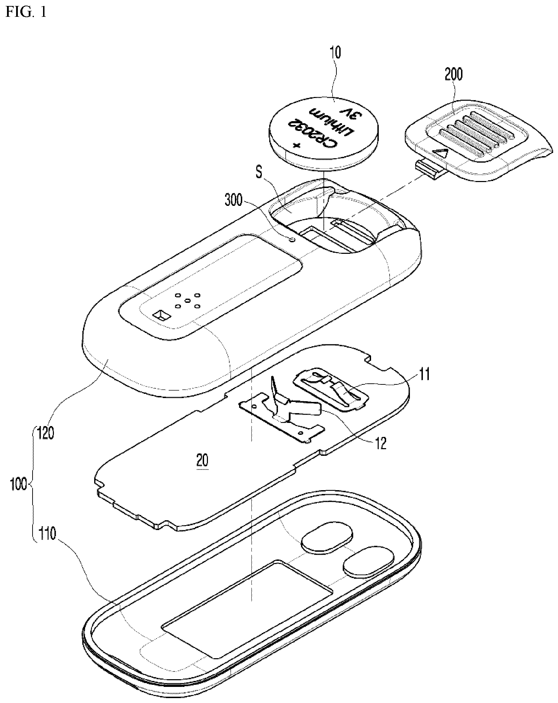

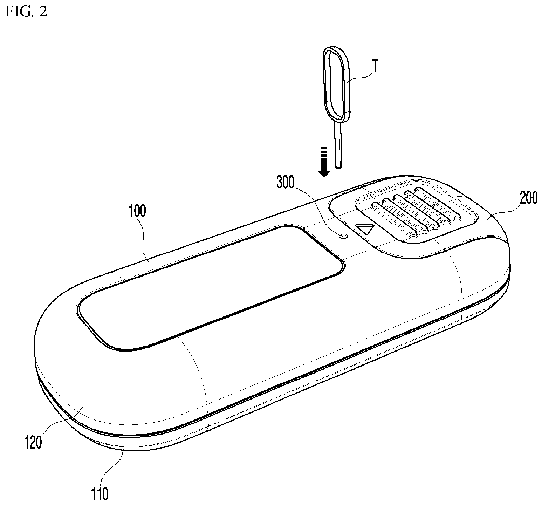

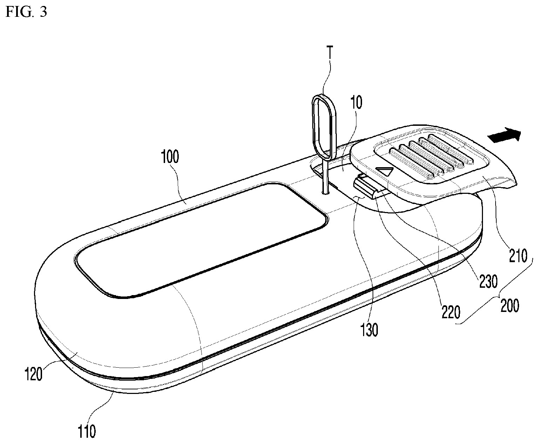

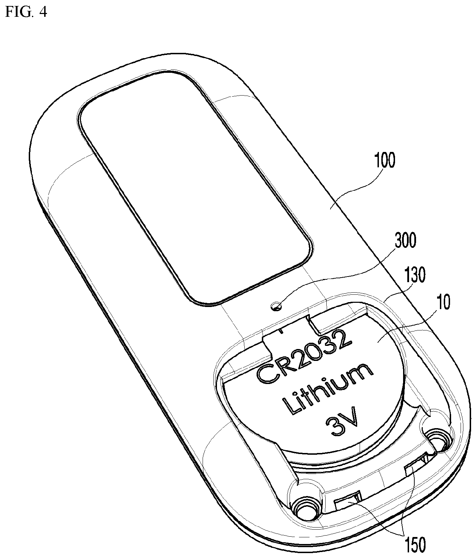

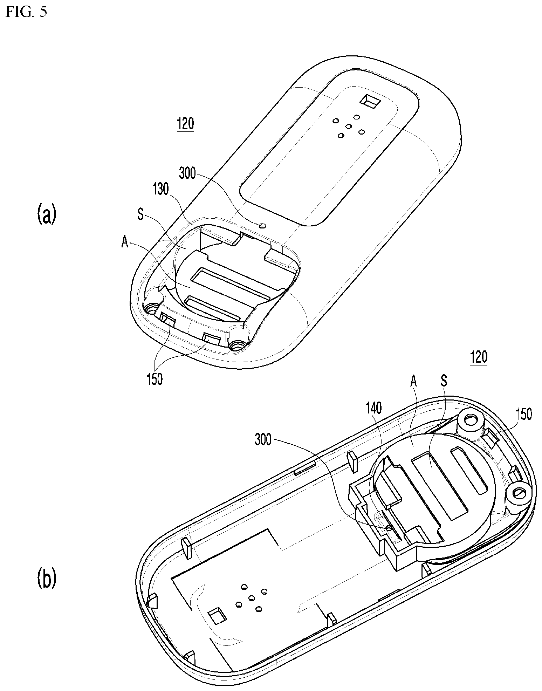

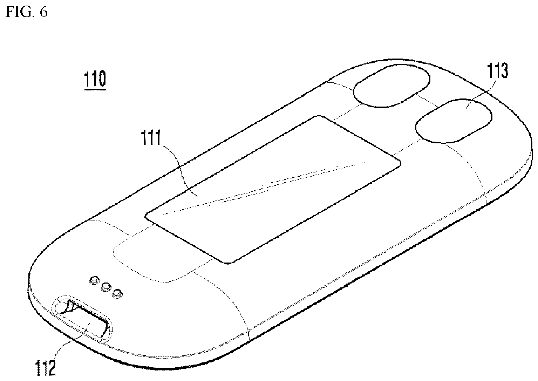

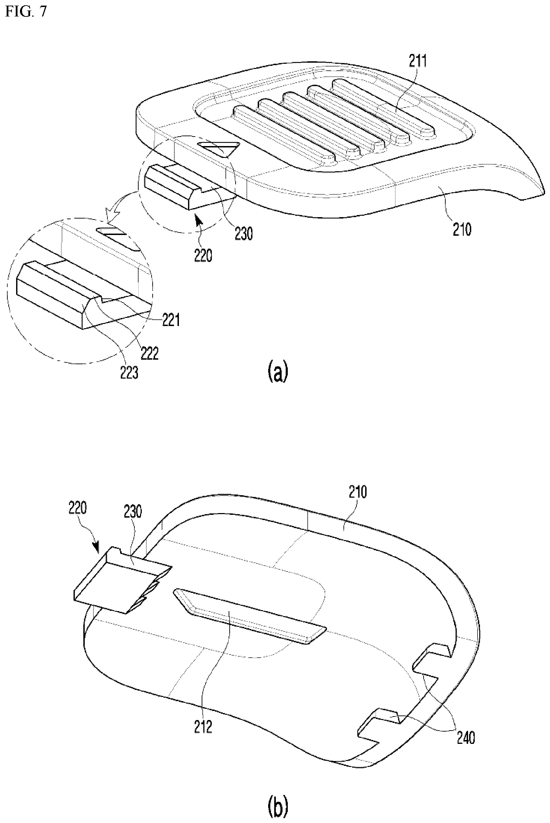

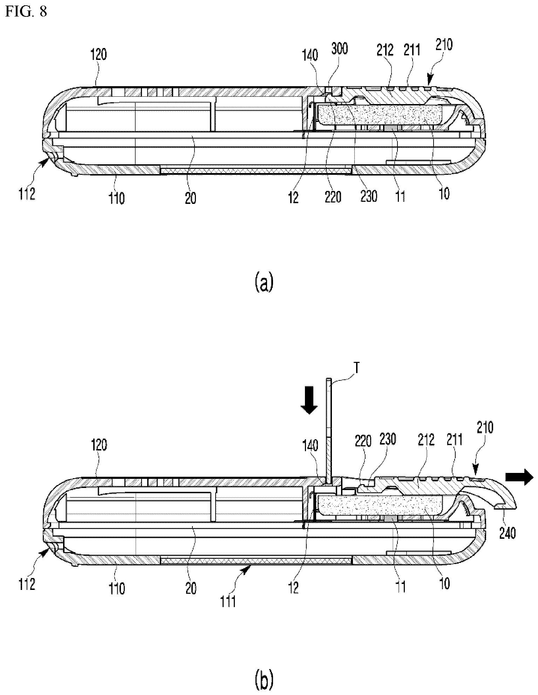

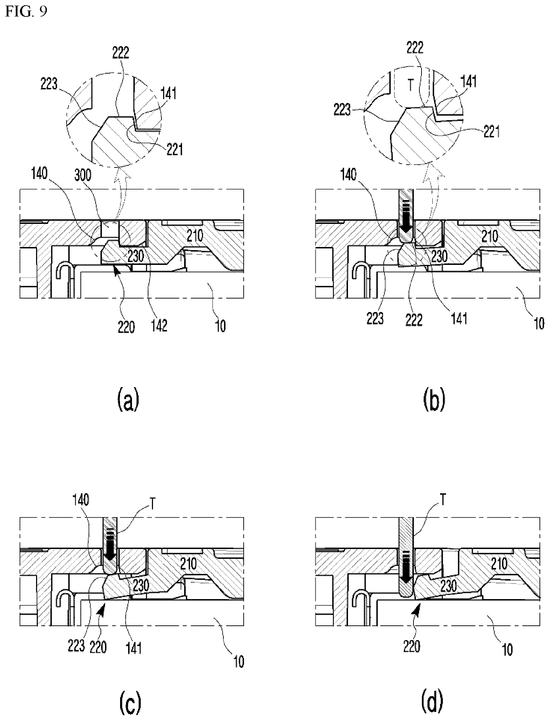

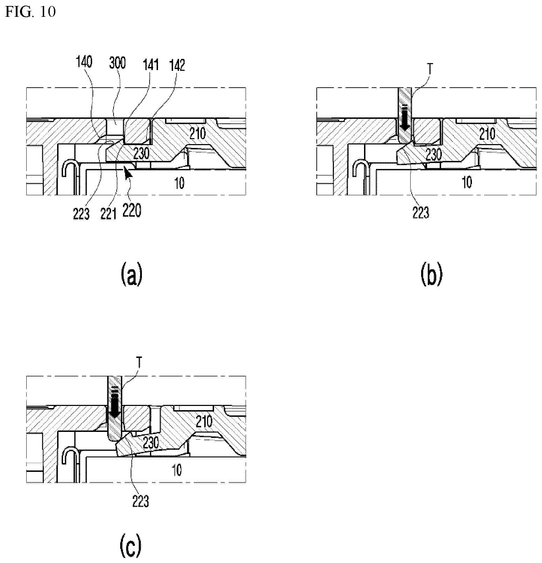

FIG. 1 is a diagram illustrating a portable medical device case disassembled according to an embodiment of the present disclosure, FIG. 2 is a diagram illustrating a perspective view of a portable medical device case according to an embodiment of the present disclosure, FIG. 3 is a diagram illustrating a state in which a cover is separated from a portable medical device case according to an embodiment of the present disclosure, FIG. 4 is a diagram illustrating a state in which a battery is exposed through a portable medical device case according to an embodiment of the present disclosure, FIG. 5 is a diagram illustrating a lower main body of a portable medical device case according to an embodiment of the present disclosure, FIG. 6 is a diagram illustrating an upper main body of a portable medical device case according to an embodiment of the present disclosure, FIG. 7 is a diagram illustrating a cover of a portable medical device case according to an embodiment of the present disclosure, FIG. 8 is a diagram illustrating a method of separating a cover from a portable medical device case according to an embodiment of the present disclosure, FIG. 9 is a diagram illustrating a step of separating a cover from a portable medical device case according to an embodiment of the present disclosure, and FIG. 10 is a diagram illustrating a step of separating a cover from a portable medical device case according to anoher embodiment of the present disclosure.

A portable medical device according to an embodiment of the present disclosure may be a device that examines, measures, and/or analyzes a sample (which may include various types such as blood, body fluid, saliva, secretions, etc.) collected from a human body or an animal. For example, the portable medical device may be a glucose meter. However, the type of the portable medical device is not limited in the present disclosure.

Referring to FIG. 1, a portable medical device case according to an embodiment of the present disclosure is a case that may be used for the above-described portable medical device, and may store and protect components for performing the functions of the medical device.

The components may include a PCB substrate 20, electronic components (not shown), and a battery 10. For example, when the portable medical device is a glucose meter, the electronic components may include a measurement module (a module for measuring glucose from a blood sample), a calculation module (a module for calculating and deriving a glucose value), and a sensor (for example, a temperature sensor). These electronic components may be mounted on the PCB substrate 20.

The battery 10 may be electrically connected to the PCB substrate 20 to supply power to the electronic components. The battery 10 may be in contact with the terminals (positive terminal, negative terminal) 11, 12 of the PCB substrate 20. The battery 10 may include a primary battery. The battery 10 may include a lithium-ion battery button cell (coin cell).

When the battery 10 needs to be replaced, it must be exposed in the case, and in the present disclosure, the battery 10 cannot be easily exposed by infants and toddlers, thereby preventing battery 10 swallowing accidents by infants and toddlers.

A portable medical device case (hereinafter, also referred to as a 'case') according to an embodiment of the present disclosure may include a main body 100, a cover 200, and a hole 300.

The cover 200 may close the inside of the main body 100 in a state of being coupled to the main body 100. The cover 200 may open the inside of the main body 100 in a state of being decoupled from the main body 100. As shown in FIG. 2, the cover 200 may close the inside of the main body 100 in a state of being engaged to the main body 100 (engaged state), and as shown in FIG. 3, it may open the inside of the main body 100 in a state of being disengaged and separated from the main body 100 (separated state). As shown in FIG. 4, completely removing the cover 200 exposes the battery 10 and allows it to be in a removable state. Accordingly, the battery 10 may be replaceable.

Here, in order for the cover 200 to change from a coupled state (engaged state) to a decoupled state (separated state), an external tool (T) must be used. Therefore, infants and toddlers who have difficulty in operating the external tool (T) cannot easily separate the cover 200 and cannot easily expose the battery 10 inside the main body 100, fundamentally preventing battery 10 swallowing accidents by infants and toddlers.

Hereinafter, the specific configuration and operation of the case will be described.

The main body 100 forms the exterior of the case and may accommodate components inside. The main body 100 may be formed in an overall streamlined three-dimensional shape, but the shape of the main body 100 is not limited in the present disclosure.

The main body 100 may be provided with a space capable of accommodating components inside. In particular, the main body 100 may be provided with a battery accommodation space (S) inside. The battery accommodation space (S) may be formed adjacent to a space where the PCB substrate 20 is located. Accordingly, the battery 10 may come into contact with the terminals (positive terminal, negative terminal) 11, 12 of the PCB substrate 20. In this case, the battery accommodation space (S) may be surrounded by the terminals (positive terminal, negative terminal) 11, 12 mounted on the PCB substrate 20.

The main body 100 may include an upper main body 110 and a lower main body 120, and a space for accommodating components may be provided between the upper main body 110 and the lower main body 120, and a battery accommodation space (S) may also be provided. Meanwhile, 'upper' and 'lower' here are not absolute locations, and may be understood as relative terms for distinguishing each other. The user may use it with the upper main body 110 facing upward to utilize medical services, and when opening or closing the cover 200 for purposes such as replacing the battery 10, it may be used with the lower main body 120 facing upward.

Referring to FIG. 5A and FIG. 5A, the battery accommodation space (S) may be formed in the lower main body 120. The battery accommodation space (S) may be configured in a recessed form toward the inner side the lower main body 120. The battery accommodation space (S) may be formed in a low cylindrical (disk) shape corresponding to the button cell (coin cell) shape.

In addition, a battery holder (A) may be provided in the battery accommodation space (S). One surface of the battery holder (A) may be in contact with one surface of the battery 10. The battery holder (A) may be formed adjacent to a space where the PCB substrate 20 is located. The other surface of the battery holder (A) may be in contact with the PCB substrate 20. An opening may be formed in the battery holder (A) to expose the terminal 11 of the PCB substrate 20, and the battery 10 located on the battery holder (A) may be in contact with the terminal 11.

An opening part 130 for entering and exiting the battery 10 may be provided in the main body 100. In other words, when the battery 10 needs to be replaced, the battery 10 may enter and exit the inside and outside of the main body 100 through the opening part 130. The opening part 130 may be formed in the lower main body 120, but the location of the opening part 130 is not limited in the present disclosure.

Referring to FIG. 6, a display 111 may be coupled to the main body 100. The display 111 may display medical information (e.g., glucose value information), etc. The display 111 may be electrically connected to the PCB substrate 20 and may be supported by the main body 100. The display 111 may be coupled to the upper main body 110, but the location of the display 111 is not limited in the present disclosure.

An inlet 112 for accommodating a sample may be formed in the main body 100. For example, the inlet 112 may accommodate a strip containing a sample. The sample of the strip accommodated in the inlet 112 may come into contact with the electronic component inside the main body 100.

In addition, the main body 100 may be provided with a button part 113 for user operation.

The cover 200 is detachably coupled to the main body 100 and is a configuration for opening and closing the battery accommodation space (S). Here, the cover 200 being 'detachably coupled' to the main body 100 means that the cover 200 may be selectively in a state of being engaged to the main body 100 (engaged state, FIG. 2) or in a state of being disengaged and separated from the main body 100 (separated state, FIG. 3). When the cover 200 is in the engaged state, the battery accommodation space (S) may be closed to the maximum extent. When the cover 200 is in the separated state, at least a portion of the battery accommodation space (S) may be opened.

When the battery 10 is mounted inside the main body 100, the cover 200 may cover and close the battery 10 in the battery accommodation space (S) in a state of being engaged to the main body 100. In addition, even when the battery 10 is not inside the main body 100, the cover 200 may cover and close the battery accommodation space (S) in a state of being engaged to the main body 100.

When the battery 10 is mounted inside the main body 100 but replacement of the battery 10 is required, the cover 200 may be separated from the main body 100 and the battery 10 of the battery accommodation space (S) may be opened and exposed. In addition, when the battery 10 is not inside the main body 100 and mounting of the battery 10 is required, the cover 200 may be separated from the main body 100 and the battery accommodation space (S) may be opened and exposed.

The cover 200 may open and close the opening part 130 of the main body 100. The shape of the cover 200 may correspond to the shape of the opening part 130 of the main body 100.

In a state where the cover 200 is engaged to the main body 100, a part of the cover 200 may be located inside the main body 100. In a state where the cover 200 is engaged to the main body 100, a part of the cover 200 may cover the opening part 130, and a part of the cover 200 may be located inside the main body 100. In other words, a part of the cover 200 may be caught on the main body 100 so that the cover 200 may not fall off and be engaged to the main body 100.

Referring to FIG. 7, the cover 200 may include a plate 210 and a fastening part 220, 230.

The plate 210 is a configuration that cover or expose the battery accommodation space (S). The plate 210 may be fitted into the opening part 130. The plate 210 may be formed in the same shape as the opening part 130 (a shape corresponding to the opening part 130). The plate 210 may include a flat part and a curved part. The plate 210 has at least two surfaces, with an inner surface facing the battery accommodation space (S) and an outer surface located on the opposite side of the inner surface.

As shown in FIG. 7A, a friction part 211 is formed on the outer surface of the plate 210 so that the user may easily move the cover 200 by pushing it. As shown in FIG. 7B, a contact part 212 capable of contacting the battery 10 may be formed on the surface of the plate 210 facing the battery accommodation space (S). In other words, the contact part 212 that comes into contact with the battery 10 is formed on the inner surface of the plate 210, so that when the cover 200 is in the engaged state, the contact part 212 comes into contact with and presses one surface of the battery 10, and accordingly, the battery 10 may be easily electrically connected to the terminal 11. The contact part 212 may be formed formed as one or more. Meanwhile, the rest of the cover 200 except for the contact part 212 may not come into contact with the battery 10.

The fastening part may be formed at one end part of the plate 210. The fastening part may extend from one end part of the plate 210. The fastening part may extend from an end part on the inner surface of the plate 210. The fastening part may be formed to have a smaller size than the plate 210.

When the cover 200 is in a state of being engaged to the main body 100, the fastening part may be located inside the main body 100. When the cover 200 is to close the battery accommodation space (S), the plate 210 is fitted into the opening part 130 to cover the battery accommodation space (S), and the fastening part is located inside the main body 100 to be caught, so that the cover 200 is engaged to the main body 100 and the battery accommodation space (S) may be completely closed.

The fastening part 220, 230 may include a protrusion part 220 and a connection part 230.

The protrusion part 220 configures an area protruding from the fastening part, and when the cover 200 is caught on the main body 100, it may play a role of actually being caught on the inside of the main body 100. The connection part 230 configures an area connecting the protrusion part 220 and the plate 210. The connection part 230 may be formed thinner than the protrusion part 220. The connection part 230 may behave elastically and be elastically deformed within a certain range. In particular, when the state of the cover 200 changes (from the engaged state to the separated state, or from the separated state to the engaged state), the connection part 230 can be bent within a certain range, and may be restored to its original state when either state is determined.

Referring to FIG. 5B, a concave part 140 may be formed on the inner surface of the main body 100. The fastening part may be inserted into the concave part 140. When the cover 200 is in the engaged state, the fastening part is inserted into the concave part 140 and does not fall out of the main body 100. In particular, the protrusion part 220 of the fastening part may be inserted into the concave part 140. When the cover 200 changes from the engaged state to the separated state, the fastening part (protrusion part 220) may fall out of the concave part 140.

The hole 300 may be formed by penetrating the main body 100. The hole 300 may be formed by penetrating the lower main body 120. The hole 300 may penetrate toward the concave part 140. In other words, the hole 300 and the concave part 140 may be in communication with each other.

The hole 300 may accommodate the external tool (T). In other words, the external tool (T) may be inserted into the hole 300. The shape of the external frame may correspond to the shape of the hole 300. The cross-section of the external tool (T) may be formed to be less than or equal to the cross-section of the hole 300. The external tool (T) may include a pin member. However, the shape of the external tool (T) is not limited in the present disclosure, and it may be configured in various types and shapes. In addition, the external tool (T) may not be determined as a specific item and may be replaced with a peripheral item such as a ballpoint pen, a toothpick, or the like.

The external tool (T) accommodated in the hole 300 may press a part of the cover 200 to separate the cover 200 from the main body 100. When the external tool (T) accommodated in the hole 300 presses a part of the cover 200, deformation (elastic deformation) occurs in a part of the cover 200, and as the location of the cover 200 changes, the cover 200 may be separated from the main body 100. Specifically, when the cover 200 is in the engaged state, a part of the cover 200 is located inside the main body 100, and the external tool (T) may be accommodated in the hole 300 to press a part of the cover 200, and accordingly, the cover 200 may be separated from the main body 100 and enter the separated state.

When the cover 200 includes the plate 210 and the fastening part, the fastening part is located inside the main body 100, and the external tool (T) accommodated in the hole 300 may press the fastening part. When the fastening part includes the protrusion part 220 and the connection part 230, the protrusion part 220 is inserted into the concave part 140, and the external tool (T) accommodated toward the concave part 140 through the hole 300 may press the protrusion part 220.

According to this method, the cover 200 may be separated from the main body 100 only when using the external tool (T), and since the cover 200 is not separated from the main body 100 by a general external force without the external tool (T), the safety of infants and toddlers may be secured.

Referring to FIG. 8, the cover 200 is in the engaged state (FIG. 8A), and the cover 200 is changed to the separated state (FIG. 8B) by insertion and pressurization of the external tool (T), and the cover 200 may be separated from the main body 100 by moving parallel to the longitudinal direction of the main body 100. The insertion direction of the external tool (T) and the movement direction of the cover 200 may be perpendicular to each other. Meanwhile, the cover 200 may be coupled to the main body 100 by moving in the opposite direction to FIG. 8A and engaged to the main body 100.

As shown in FIG. 7B, one or more hooks 240 may be formed on the plate 210. The hook 240 may be formed on the other end part of the plate 210. The hook 240 may be formed on the opposite side to the fastening part. The hook 240 may be formed on the inner surface of the plate 210. The hook 240 may extend parallel to the longitudinal direction of the main body 100. The hook 240 may be formed to protrude inwardly on a surface of the plate 210 facing the battery accommodation space (S).

Referring to FIG. 4 and FIG. 5, an insertion groove 150 into which the hook 240 is inserted may be formed in the main body 100. The insertion groove 150 may be formed in the lower main body 120. The insertion groove 150 may be formed to correspond to the shape and number of the hook 240. As the hook 240 is inserted into the insertion groove 150, the cover (200) may be further engaged to the main body 100. The insertion groove 150 may extend parallel to the longitudinal direction of the main body 100. The hook 240 may be inserted into the insertion groove 150 by moving parallel to the longitudinal direction of the main body 100, or removed from the insertion groove 150.

Referring again to FIG. 8, not only the cover 200 but also the hook 240 may be separated from the main body 100 by moving parallel to the longitudinal direction of the main body 100. In addition, not only the cover 200 but also the hook 240 may be inserted into the insertion groove 150 by moving in the opposite direction to FIG. 8B, and the cover 200 may be further engaged to the main body 100. In particular, by fastening the hook 240 and the insertion groove 150, the cover 200 may be restricted from moving in the vertical direction.

Referring to FIG. 9, the inner surface of the concave part 140 may include a first inclined surface 141, and the fastening part (protrusion part 220) may include a second inclined surface 221 facing the first inclined surface 141. When the cover 200 is changed from the engaged state to the separated state, the fastening part may move along the first inclined surface 141 of the concave part 140.

As shown in FIG. 9A, the first inclined surface 141 may be provided on the surface facing the fastening part among the inner surface of the concave part 140. In addition, the fastening part may be provided with a second inclined surface 221, and the first inclined surface 141 and the second inclined surface 221 may be inclined in the same direction, and the inclinations of the first inclined surface 141 and the second inclined surface 221 may be the same. The first inclined surface 141 and the second inclined surface 221 may have a downward slope toward the plate 210 side. When the fastening part is pressed, the second inclined surface 221 is easy to move along the first inclined surface 141.

Referring to FIG. 9A, the cover 200 is in the engaged state, the protrusion part 220 of the fastening part is inserted into the concave part 140, and the second inclined surface 221 is caught on the first inclined surface 141, so that the protrusion part 220 does not fall out of the concave part 140. In addition, the protrusion part 220 is spaced apart from the battery 10.

The fastening part (protrusion part 220) has a pressure surface which is pressed by the external tool (T), and the pressure surface may have a flat surface 222 and/or an inclined surface 223. Here, flat may mean formed parallel to the main surface of the main body 100 and perpendicular to the insertion direction of the external tool (T). In addition, the inclined surface 223 may mean forming a predetermined angle with the flat surface 222. In FIG. 9, the pressure surface has both the flat surface 222 and the inclined surface 223.

Referring to FIG. 9B, the external tool (T) may press the flat surface 222 first. When the external tool (T) inserted into the hole 300 presses the flat surface 222, the connection part 230 begins to elastically deform, and the protrusion part 220 moves inward (downward in FIG. 9) by a predetermined distance. The second inclined surface 221 may move along the first inclined surface 141.

Referring to FIG. 9, the external tool (T) is further inserted to further press the flat surface 222, the connection part 230 becomes more elastically deformed, and the protrusion part 220 moves further inward. Afterwards, the external tool (T) may press the inclined surface 223 of the pressure surface. The protrusion part 220 may move inward until the second inclined surface 221 leaves the first inclined surface 141.

Referring to FIG. 9D, the external tool (T) may press the protrusion part 220 to the maximum to push the protrusion part 220. Accordingly, the entire cover 200 including the plate 210 may be pushed outward. When the protrusion part 220 completely leaves the main body 100, the state shown in FIG. 8B is achieved, and the cover 200 may enter the separated state. Since the connection part 230 is elastically deformed, it may return to its original state in an area of the opening part 130 of the main body 100. In addition, the external tool (T) may be removed and reused.

If the cover 200 is to be returned to the engaged state, FIG. 9A to FIG. 9D may be performed in reverse (however, the external tool (T) is not necessary). The plate 210 is fitted into the opening part 130, and the fastening part may be introduced into the main body 100. A third inclined surface 142 may be formed on a part of the main body 100 into which the fastening part is introduced. The third inclined surface 142 may have a downward slope toward the concave part 140. The protrusion part 220 may be easily introduced into the main body 100 along the third inclined surface 142. In particular, when the inclined surface 223 of the pressure surface moves along the third inclined surface 142, the protrusion part 220 may be introduced more smoothly.

When the protrusion part 220 is introduced into the main body 100, the state becomes the same as that of FIG. 9D excluding the external tool (T), and the connection part 230 is elastically deformed. When the protrusion part 220 is introduced to the concave part 140 side (FIG. 9C), the connection part 230 gradually recovers to its original state (FIG. 9B), and the protrusion part 220 may be caught on the concave part 140 and engaged (FIG. 9A).

In short, when it is desired to change the cover 200 from the engaged state to the separated state, the external tool (T) must be used, and when it is desired to change the cover 200 from the separated state to the engaged state, the fastening part of the cover 200 may be introduced into the main body 100 without using the external tool (T).

Referring to FIG. 10, the pressure surface includes an inclined surface 223, and the external tool (T) may press the inclined surface 223 first. The difference compared to FIG. 9 is that in FIG. 10, the area of the inclined surface 223 in the pressure surface is larger, and the external tool (T) presses the inclined surface 223. The remaining configuration may be the same as FIG. 9.

Referring to FIG. 10A, the cover 200 is in the engaged state, the protrusion part 220 of the fastening part is inserted into the concave part 140, and the second inclined surface 221 is caught on the first inclined surface 141, so that the protrusion part 220 does not fall out of the concave part 140. In addition, the protrusion part 220 is spaced apart from the battery 10.

Referring to FIG. 10B, the external tool (T) inserted into the hole 300 presses the inclined surface 223, and accordingly, the connection part 230 begins to elastically deform, and the protrusion part 220 moves inward (downward in FIG. 10) by a predetermined distance. The second inclined surface 221 may move along the first inclined surface 141.

Referring to FIG. 10C, the external tool (T) may sufficiently press the inclined surface 223 to push out the protrusion part 220 until the second inclined surface 221 leaves the first inclined surface 141. Accordingly, the entire cover 200 including the plate 210 may be pushed outward. When the protrusion part 220 completely leaves the main body 100, the state shown in FIG. 8B is achieved, and the cover (200) may enter the separated state. Since the connection part 230 is elastically deformed, it may return to its original state in the area of the opening part 130 of the main body 100. In addition, the external tool (T) may be removed and reused.

In addition, if the cover 200 is to be returned to the engaged state, FIG. 10A to FIG. 10C may be performed in reverse (however, the external tool (T) is not necessary).

As described above, the operation of the external tool (T) and the fastening part 220, 230 has been described with reference to FIG. 9 and FIG. 10, but the present disclosure is not limited to FIG. 9 or FIG. 10. The configuration of the fastening part may be variously changed, and the pressure surface and the inclined surface of the fastening part (protrusion part 220) may be variously configured so as to apply a method of pushing the fastening part using the external tool (T).

As described above, the present invention ensures that an external tool (T) must be used to separate the cover 200 from the case, preventing infants and toddlers from easily accessing the battery 10, and the cover 200 may be re-coupled to the case using a simple fitting method without the need for an external tool (T). Accordingly, both infant and toddler safety and user convenience may be improved.

Although embodiments of the present disclosure have been described above, those skilled in the art will be able to make various modifications and changes to the present disclosure by adding, changing or deleting components, without departing from the spirit of the present disclosure as set forth in the appended claims, which are included within the scope of rights of the present disclosure.

### <Explanation of Symbols>

10: Battery
100: Main body
110: Upper main body
120: Lower main body
130: Opening part
140: Concave part
141: First inclined surface
142: Third inclined surface
150: Insertion groove
S: Battery accommodation space
200: Cover
210: Plate
220: Protrusion part
221: Second inclined surface
222: Pressure surface (flat surface)
223: Pressure surface (inclined side)
230: Connection part
300: Hole
T: External tool

## Claims

1. A portable medical device case comprising:
a main body provided with a battery accommodation space inside;
a cover detachably coupled to the main body to open and close the battery accommodation space; and
a hole penetrating at least a part of the main body,
wherein in a state where the cover is coupled to the main body, a part of the cover is located inside the main body, and
the hole accommodates an external tool which presses a part of the cover to separate the cover from the main body.

2. The portable medical device case according to claim 1, wherein the cover comprises:
a plate; and
a fastening part formed at one end part of the plate and pressed by the external tool inside the main body.

3. The portable medical device case according to claim 2, wherein a concave part is formed on an inner surface of the main body,
the fastening part is inserted into the concave part inside the main body, and
the hole is penetrated toward the concave part.

4. The portable medical device case according to claim 3, wherein an inner surface of the concave part comprises a first inclined surface, and
the fastening part comprises a second inclined surface facing the first inclined surface.

5. The portable medical device case according to claim 2, wherein the fastening part comprises a pressure surface which is pressed by the external tool, and
the pressure surface comprises an inclined surface.

6. The portable medical device case according to claim 2, wherein a contact part capable of contacting a battery is formed on a surface of the plate facing the battery accommodation space.

7. The portable medical device case according to claim 2, wherein a hook is formed at another end part of the plate, and
an insertion groove into which the hook is inserted is formed in the main body.

8. The portable medical device case according to claim 1, wherein the cover is separated from the main body by moving parallel to a longitudinal direction of the main body.
